(19) Europäisches Patentamt
European Patent Office
Office européen des brevets

(11) **EP 1 854 762 B1**

(12) **EUROPÄISCHE PATENTSCHRIFT**

(45) Veröffentlichungstag und Bekanntmachung des Hinweises auf die Patenterteilung:
**15.12.2010 Patentblatt 2010/50**

(51) Int Cl.:
*C01F 7/02* (2006.01)     *C01F 7/46* (2006.01)
*C04B 14/30* (2006.01)    *C04B 35/10* (2006.01)

(21) Anmeldenummer: **07003317.0**

(22) Anmeldetag: **16.02.2007**

(54) **Verfahren zur Herstellung von Industriekeramik-Rohstoff aus alkalihaltiger Tonerde**

Method for manufacturing raw material for industrial ceramics made of alkaline alumina

Procédé destiné à la fabrication de matières premières de l'industrie céramique à partir d'alumine à teneur alcaline

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **18.02.2006 DE 102006005400**

(43) Veröffentlichungstag der Anmeldung:
**14.11.2007 Patentblatt 2007/46**

(73) Patentinhaber: **Nabaltec AG**
**92421 Schwandorf (DE)**

(72) Erfinder:
• **Prescher, Dieter**
**92421 Schwandorf (DE)**
• **Kupfer, Jan**
**93049 Regensburg (DE)**

(74) Vertreter: **Müller-Wolff, Thomas et al**
**Flaccus · Müller-Wolff**
**Patentanwälte**
**Bussardweg 10**
**50389 Wesseling (DE)**

(56) Entgegenhaltungen:
WO-A-2005/123590     FR-A- 2 725 440
GB-A- 2 108 949      US-A- 1 950 883
US-A- 3 106 452

• **DATABASE WPI Week 200567 Derwent Publications Ltd., London, GB; AN 2005-653571 XP002434141 & JP 2005 263529 A (SUMITOMO CHEM CO LTD) 29. September 2005 (2005-09-29)**
• **XU L ET AL: "Synthesis, evaluation and characterization of alumina ceramics with elongated grains" CERAMICS INTERNATIONAL, CERAMURGICA, FAENZA, IT, Bd. 31, Nr. 7, 2005, Seiten 953-958, XP004966745 ISSN: 0272-8842**
• **DATABASE WPI Week 198919 Derwent Publications Ltd., London, GB; AN 1989-140084 XP002434142 & JP 01 083512 A (SHOWA DENKO KK) 29. März 1989 (1989-03-29)**

**Beschreibung**

Die Erfindung betrifft ein Verfahren zur Herstellung von Industriekeramik-Rohstoff aus alkalihaltiger Tonerde, die nach dem BAYER-Verfahren hergestellt wurde.

Als Tonerden werden Verbindungen bezeichnet, die hauptsächlich aus Aluminium und Sauerstoff bestehen, wie z. B. der sogenannte Korund, der die Struktur der $\alpha$-Modifikation des $Al_2O_3$ aufweist, die durch ihre extreme Härte, ihren hohen Schmelzpunkt und ihre Korrosionsstabilität gegenüber aggressiven Chemikalien gekennzeichnet ist. Die $\gamma$-Modifikation des $Al_2O_3$ wird auch als Tonerde bezeichnet und ist oberflächenreich, weiß und weich. Die Gamma-Modifikation des $Al_2O_3$ wird als Katalysator und -Träger sowie als oberflächenreiches Adsorbens eingesetzt.

Bei hohen Temperaturen wandelt sich die Gamma-Modifikation des $Al_2O_3$ in die Alpha-Modifikation um. Daher können beide Modifikationen zur Synthese von Hochtemperaturwerkstoffen, Schleifmitteln, keramischen Fasern oder künstlichen Edelsteinen verwendet werden.

Ausgehend von einem hydratisierten Aluminiumoxid (Tonerderohstoff) kann bei Temperaturen oberhalb von 400 °C die Bildung struktureller Mischphasen im Rahmen der Umwandlung zur Alpha-Modifikation des $Al_2O_3$ beobachtet werden. Diese Mischphasen werden auch als Übergangsoxide bezeichnet. Einige dieser bei Raumtemperatur metastabilen Phasen wurden bei Tonerden bereits auf ihre Struktur hin untersucht und klassifiziert. So kennt man heute sog. Übergangstonerden des Typs Chi, Gamma, Delta, Kappa und Theta.

Tonerden können herstellungsbedingt Spuren von Metalloxiden enthalten, die die o. g. Eigenschaften unvorhersehbar verändern. Deshalb werden Tonerderohstoffe und Übergangstonerden im Wege ihrer Verarbeitung zur Alpha-Tonerde über bekannte Verfahren gereinigt.

Ein etabliertes Verfahren zur Herstellung von Tonerderohstoffen ist das Bayer-Verfahren. Im Bayer-Verfahren wird mit Hilfe konzentrierter Natronlauge eine heiße Aluminatlauge erzeugt. Anschließend werden die alkalisch unlöslichen Verunreinigungen wie z. B. Eisenoxide abgetrennt und das gelöste Aluminium in Gegenwart von Aluminiumhydroxid-Impfkristallen während des Abkühlens der verdünnten Lauge als Aluminiumhydroxid ausgefällt.

Nach dem Bayer-Verfahren hergestelltes Aluminiumhydroxid enthält stets Alkali, welches in das Hydrargillitgitter eingebaut ist und dieses stabilisieren soll.

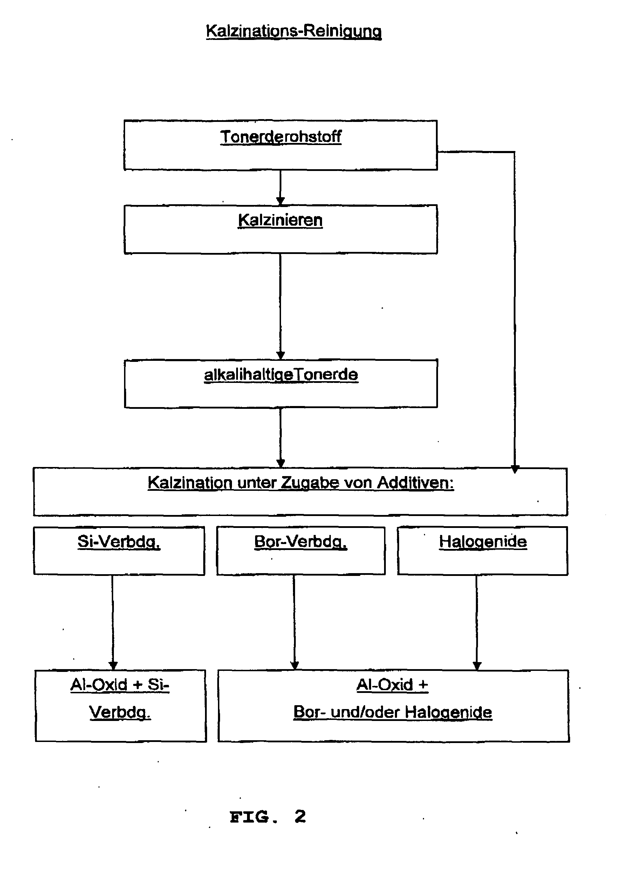

Dieses Aluminiumhydroxid kann großtechnisch in einem Drehrohrofen oder in einem Wirbelschichtreaktor durch Kalzination bei hoher Temperatur unter Entwässerung in kristalline Tonerde umgewandelt werden (vgl. Fig. 2).

Das enthaltene Alkali führt als mengenmäßig größte und in der Regel unerwünschte Verunreinigung bei der Kalzination des Bayer-Hydrats zu $Na_2O$-Gehalten in den Tonerden in der Größenordnung von 0,3 - 0,5 Gewichts-%.

Industriell verarbeitete Tonerden des SGA-Typs (SGA = Smeltergrade-alumina) unterscheiden sich üblicherweise von Aluminiumoxid für die Keramik- und Feuerfestindustrie durch ihren deutlich niedrigeren Anteil an Alpha-$Al_2O_3$ (< 30 %) und ihre hohe spezifische Oberfläche (30 - 100 $m^2/g$). So beschreibt z. B. die FR 27 25 440 A1 ein Verfahren zur Herstellung von Natriumoxid-armer Tonerde von SGA-Qualität, bei dem AluminiumTrihydrat bei 700 °C $\leq$ T $\leq$ 1200 °C zu Tonerde umgesetzt, in wässriger Aufschlämmung unter $CO_2$-Zugabe gereinigt, gewaschen, abgetrennt und bei 300°C bis 1100°C thermisch zu einer Tonerde, enthaltend 0,1 bis 0,16 Gewichtsprozent Natriumoxid, nachbehandelt wird. Diese kann anschließend mit Tonerden mit höherem $Na_2O$-Gehalt auf den gewünschten $Na_2O$-Gesamtgehalt abgemischt werden.

In der Keramik- und Feuerfestindustrie werden dagegen bevorzugt Qualitäten mit einem Anteil der Alpha-Modifikation von min. 80 % eingesetzt.

Um der Anforderung nach einem hohen Gehalt an Alpha-Modifikation nachzukommen, werden in den auf die Produktion von Aluminiumoxiden ausgerichteten Oxidfabriken die Zwischenprodukte aus der Aluminiumerzeugung wie Aluminiumhydroxide aus dem BAYER-Prozess oder auch Tonerden einer thermischen Nachbehandlung unter Zugabe von Additiven bei erhöhter Temperatur unterzogen, deren Ziel die Ausbildung des geforderten Anteils an Alpha-Modifikation ist.

Für Feuerfestprodukte und in der keramischen Industrie werden weiterhin Aluminiumoxide gefordert, die sich neben dem hohen Gehalt an Alpha-Modifikation durch hohe Reinheit und einen wesentlich reduzierten Alkaligehalt ($\leq$ 0,1 %) auszeichnen. Die Tonerden, vor allem aber über das Bayer-Verfahren gereinigte Tonerde, enthalten bis zu 0,5 % an Alkalimetalloxiden wie Natriumoxid ($Na_2O$). Bei sehr hohen Temperaturen kann die Tonerde mit dem Natriumoxid eine Verbindung mit der Summenformel $NaAl_{11}O_{17}$ bilden. Diese auch als $\beta$-$Al_2O_3$ bezeichnete Verbindung ist ein zweidimensionaler Hochtemperatur-Natriumionenleiter mit einer deutlich abweichenden Kristallstruktur.

Keramiken, die aus $\beta$-$Al_2O_3$ bestehen, zeigen im Vergleich zu reinen Aluminiumoxidkeramiken eine abweichende, mikrokristalline Struktur, veränderte, mechanische Belastbarkeit und besitzen bei erhöhter Temperatur eine unerwartet gute elektrische Leitfähigkeit.

Tonerdekeramiken, die mit Alkalimetalloxiden verunreinigt sind, sind in ihrer mikrokristallinen Struktur inhomogen und können eine verringerte mechanische Belastbarkeit sowie schlechte elektrische Isolationseigenschaften bei erhöhter Temperatur aufweisen. Bei wechselndem Alkalimetalloxid-Gehalt ist die Qualität einer solchen Keramik nicht mehr vorhersagbar.

Bei der Herstellung von Aluminiumoxiden für die Feuerfest- und Keramik-Industrie wird der Alkaligehalt daher z. B. über eine vorgeschaltete Reinigung von Aluminiumhydroxiden über komplexe Löse- und Rekristallisationsprozesse und anschließende thermische Nachbehandlung gesenkt.

Alkalihaltige Tonerden können auch, wie in Fig. 2 veranschaulicht, direkt im Kalzinationsprozess zur Herstellung von Aluminiumoxiden einem chemischen Kalzinations-Reinigungsverfahren unterzogen werden. Die direkte Erzeugung von Kalzinaten mit geringem Alkaligehalt gelingt durch Zugabe von Additiven, die bei den hohen Prozesstemperaturen eine Alkaliabreichung bewirken. Bei den Kalzinationsadditiven unterscheidet man zwischen Prozessvarianten, bei denen entweder die Entalkalisierung der Kalzinationsrohstoffe durch Zugabe von Siliciumverbindungen wie Silica, Quarz, Schamotten o. ä. erreicht wird oder bei denen die Alkaliabreicherung über Zugabe von Halogeniden und/oder Borsäure bzw. Borsäurederivaten bewirkt wird.

Die vorstehend beschriebenen, verfahrenstechnischen Varianten zur Entalkalisierung bzw. Alkaliabreicherung von Tonerde weisen jedoch gravierende Nachteile auf. Auf Grund der ihnen eigenen Mineralisatorwirkung können selbst Restspuren der zugesetzten Halogenide oder Borsäureverbindungen im Kalzinationsprodukt zu unerwünschten Folgeeffekten bei der Herstellung hochwertiger keramischer Bauteile führen, da in dem dabei durchgeführten Sinterprozess eine unerwünschte Beeinflussung der Gefügestruktur auftritt.

So bewirken Mineralisatoren wie z. B. Borsäure oder ihre Verbindungen ein stark beschleunigtes Kristallwachstum der Karund-Primärkristalle während der Kalzination von Tonerden und Tonerderohstoffen sowie während des Sinterns daraus hergestellter keramischer Bauteile. In Gegenwart eines solchen Mineralisators kommt es so zu einer Gefügevergröberung. Die Festigkeit von keramischen Körpern nimmt mit zunehmender Gefügevergröberung drastisch ab (vgl. 'Aluminiumoxid'; Petzold, A.; Ulbricht, J.; Deutscher Verlag für Grundstoffindustrie, Leipzig 1990, S. 130 ff). Bei lokal schwankender Konzentration an Mineralisatoren erfolgt während des Sinterns eine ungleichmäßige Gefügevergröberung, die die Festigkeit und Stabilität eines keramischen Körpers massiv schwächt.

Ein weiterer Nachteil der Zugabe von Kalzinationsadditiven besteht in der Tatsache, dass sowohl Borverbindungen als auch $SiO_2$ sich letztlich in den Korngrenzen der keramischen Gefüge wiederfinden und angestrebte Endprodukteigenschaften negativ beeinflussen. So verringern z. B. $SiO_2$-Verbindungen in Aluminiumoxid-Keramiken die Korrosionsbeständigkeit des keramischen Körpers erheblich (vgl. 'Technische Keramische Werkstoffe'; J. Kriegesmann (Hrsg.); Verlagsgruppe Deutscher Wirtschaftsdienst, Kap. 5.4.1.2 sowie Kap. 5.4.1.2.1).

Aus GB 2 108 949 ist bekannt, ein über einen beliebigen, alkalischen Aufschlussprozess aus Bauxit gewonnenes, ungereinigtes, technisches Aluminiumhydroxid bei 500-600 °C zu aktivieren, mit einer verdünnten $Ca^{2+}$-Lösung mehrfach zu waschen und bei Unterschreiten eines $Na_2O$-Gehalts von 0,15 % mit 0,4 bis 0,7 % einer Mineralisatoren-Mischung, enthaltend Borsäure, Aluminiumfluorid und Calciumfluorid zu versetzen. Die Mischung wird bei 1200 °C bis 1350 °C kalziniert. Es wird ein Alpha-Aluminiumoxid in Form von 99,8 %igem $Al_2O_3$ mit einem $Na_2O$-Gehalt von 0,05 bis 0,1 % und einer BET-Oberfläche von 0,8 m$^2$/g erhalten (Beispiel 1).

US 3,106,452 beschreibt ein Verfahren zur Absenkung des $Na_2O$-Gehalts in technischem Hütten-Aluminiumoxid, bei dem das Aluminiumoxid in Gegenwart einen anorganischen, $SiO_2$-haltigen Materials, welches das $Na_2O$ aufzunehmen vermag, auf eine Temperatur zwischen 1260 °C und 1520 °C erhitzt wird, um ein $Na_2O$-haltiges Material auszubilden (Anspruch 1). Das behandelte Aluminiumoxid mit 80 bis 95 % Anteil an Alpha-$Al_2O_3$ wird durch Sieben abgetrennt und weist einen $Na_2O$-Gehalt von 0,02 bis 0,09 % auf (Tabelle 1).

Aus JP 2005263529 ist bekannt, einen Katalysatorträger aus aktiviertem, rehydratisiertem Aluminiumoxid mit einer sauren Waschlösung mit einem auf 4 bis 6 eingestellten pH-Wert zu waschen, um ein aktiviertes Aluminiumoxid mit einem Alkalimetallgehalt von weniger als 0,05 Gew.-% und einer BET-Oberfläche von 100 bis 400 m$^2$ pro Gramm zu erhalten. Durch Kalzination bei 1300 bis 1400 °C wird daraus alkaliarmes Alpha-$Al_2O_2$ als Katalysatorträger für die Methanoldehydrierung gewonnen.

Eine andere, bekannte Methode zur Erzeugung alkaliarmer Aluminiumoxide ist das Waschen der Tonerde mit Säuren. Sie führt jedoch im Falle des Einsatzes von Halogen-Wasserstoffsäuren zu unerwünschten Nebeneffekten, da bei der anschließenden Verarbeitung des entalkalisierten Aluminiumoxids zu einem keramischen Produkt Halogenide als Mineralisatoren wie bereits erläutert die Ausbildung von groben anisotrop ausgebildeten Korundkristallen im Endprodukt bewirken können. Dies bedeutet wiederum, dass Festigkeit und Homogenität des keramischen Bauteils herabgesetzt werden.

Bei der Anwendung starker Mineralsäuren oder organischer Säuren treten zudem noch umwelttechnisch problematische Prozessabwässer bzw. Emissionen auf.

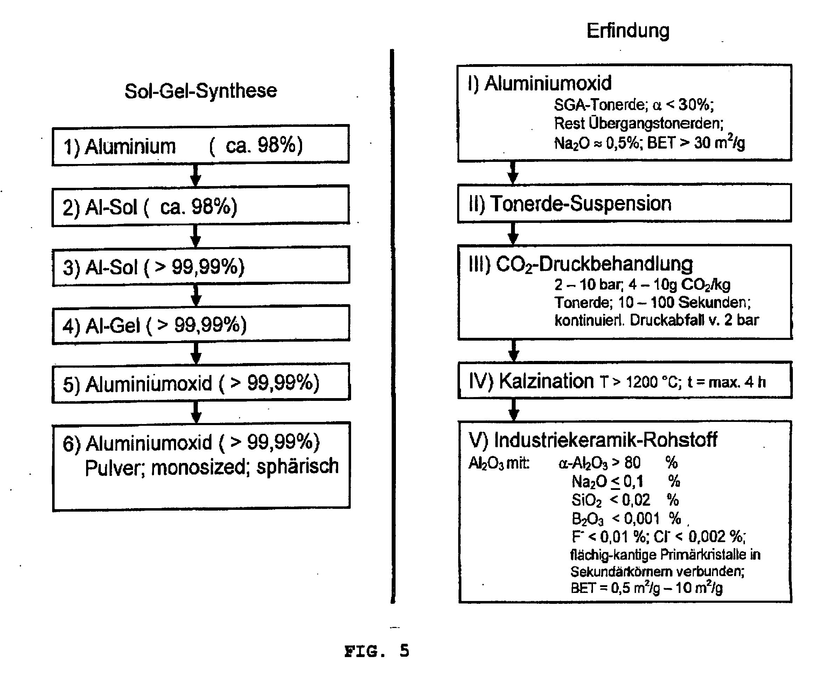

Aus dem Bereich hochpreisiger Spezialoxide sind Verfahren zur Herstellung von Kleinmengen an höchst reinem, in seiner Korngröße und -form exakt eingestelltem Aluminiumoxidpulver aus Aluminiummetall, Aluminiumalkoholaten oder Aluminiumsulfatlösungen bekannt. Diese Aluminiumoxide dienen zur Herstellung von höchst belastbaren Spezialprodukten wie z. B. individuell angepassten, künstlichen Gelenkprothesen. Diese Pulver sind auf Grund der kostenintensiven und langwierigen Herstellung von kleinen Mengen als Rohstoff für Industriekeramik ungeeignet. Ein Verfahren, in Figur 5 als Sol-Gel-Synthese in einem Flussdiagramm veranschaulicht, wird nachfolgend kurz umrissen. Zunächst wird aus Aluminium-Metall eine Lösung wie z. B. eine Alkoxid- oder Chloridlösung hergestellt. Diese Lösung wird gereinigt, in ein Gel umgewandelt und unter genauestens kontrollierten Bedingungen in ein Aluminiumoxid überführt. Gegebenenfalls erfolgt abschließend eine Feinstvermahlung sowie Klassierung. Die so hergestellten Pulver bestehen aus ephärischen, glatten Kristallen gleicher Größe, die auf Grund ihrer extrem engen Korngrößenverteilung auch als 'monosized' bezeichnet werden.

Der vorliegenden Erfindung lag zunächst die Aufgabe zugrunde, ein kostengünstiges Verfahren zur Herstellung von Keramikrohstoffen für Industriekeramik auf Basis von gereinigtem Alpha-Aluminiumoxid aus Tonerde anzubieten, das einen konstant niedrig eingestellten Alkalimetalloxid-Gehalt und damit eine reproduzierbare Erzeugung hochwertiger, industrieller, keramischer Bauteile ermöglicht. Diese Aufgabe wird mit den Merkmalen des Patentanspruches 1 gelöst. Eine weitere Aufgabe besteht in der Bereitstellung gereinigter Aluminiumoxide mit Natriumoxidgehalten < 0,1 %, BET-Oberflächen von 0,5-10 $m^2$/g, gleichmäßiger Gefügestruktur aus Aluminiumoxid-Sekundärkörnern, bestehend aus Primärkristallen von flächig-kantiger Form, und niedrig eingestellten Gehalten an den Mineralisatoren $B_2O_3$, F-, Cl- und korrosionsförderndem $SiO_2$. Diese wird durch die Merkmale von Anspruch 12 gelöst.

In einem ersten Schritt zur Lösung der Aufgabe wurde im Rahmen einer Versuchsreihe das Laugungsverhalten von Tonerden mit hoher spezifischer Oberfläche untersucht, wobei durch Waschen entweder mit neutralen oder mit mineralsauren Lösungen der wasserlösliche $Na_2O$-Anteil aus dem Rohstoff eluiert und ein Restalkaligehalt von $\leq 0,10$ % im Produkt erreicht werden sollte. Das Ergebnis der Behandlung mit destilliertem Wasser zeigt Tabelle 1.

Je 200 g Tonerde wurden in einem Gefäß mit einem halben Liter reinen, destillierten Wassers versetzt, 15 Minuten intensiv gerührt und danach über eine Nutsche abfiltriert. Der Filterkuchen auf der Nutsche wurde dreimal mit 100 ml Wasser gewaschen und danach getrocknet. Die Bestimmung des Natriumgehaltes in den trockenen Proben erfolgte mittels ICP.

Tabelle 1: Daten verschiedener Tonerden vor und nach der Behandlung mit dest. Wasser

| Nr. | 1 | 2 | 3 | 4 |
|---|---|---|---|---|
| BET-Oberfläche [$m^2$/g] | 8,6 | 10,1 | 53,6 | 86,0 |
| $Na_2O$-Gehalt (zuvor) [Gew-%] | 0,33 | 0,31 | 0,34 | 0,30 |
| $Na_2O$-Gehalt (nachher) [Gew-%] | 0,16 | 0,13 | 0,27 | 0,24 |

Wie Tabelle 1 zeigt, konnte vor allem bei Tonerden mit sehr großer BET-Oberfläche der Gehalt an Natriumoxid nur unwesentlich verringert werden.

Um das Gleichgewicht der Lösungsreaktion des auf der Feststoffoberfläche adsorbierten $Na_2O_{ads}$ auf die Seite der gelösten Produkte zu verschieben, wurde in weiteren Versuchen das Waschmedium mit einer Säure versetzt. Gemäß Gleichung 1 unterstützt eine Säure HX die Auflösung des Natriumoxids durch Bildung eines gelösten Salzes $NaX_{LSG}$.

$$\text{Gl. (1)} \qquad Na_2O_{ads} + 2\ H^+ + 2\ X^-\ H_2O + 2\ NaX_{LSG}.$$

Es ist zu erwarten, dass die Neutralisation des adsorbierten $Na_2O$ um so besser verläuft, je stärker die Säure und je löslicher das gebildete Salz ist.

Die Stärke einer Säure beschreibt ihre Neigung, Protonen (= $H^+$) abzugeben. Diese werden bei der Neutralisation verbraucht.

Die Löslichkeit einer Verbindung beschreibt, wie viele Gramm dieser Verbindung in einem Liter Lösungsmittel aufgelöst werden können. Sehr schwerlösliche Salze fallen bei einer solchen Bildungs-Reaktion als Niederschlag aus, gehen nicht wieder in Lösung und verbleiben im Feststoff als $NaX_{FEST}$.

Eine Charge einer Tonerde wurde auf ihre BET-Oberfläche hin untersucht, ihr $Na_2O$-Gehalt wurde mittels ICP bestimmt und anschließend mit einer Feststoffkonzentration von 400 g pro Liter mit 0,1%iger Salzsäure vermischt, abgetrennt und gewaschen. Zu Vergleichszwecken wurde eine zweite Charge so lange mit Kohlendioxid versetzt, bis ein pH < 7 festgestellt wurde und anschließend abgetrennt und gewaschen.

Dabei wird das vorhandene $Na_2O$ gemäß den Gleichungen 2 bis 5 umgesetzt.

$$\textbf{Gl. (2): Salzsäure: } Na_2O_{ads} + 2\ H^+ + 2\ Cl^- = H_2O + 2\ NaCl_{LSG}.$$

$$\textbf{L(NaCl)} = \textbf{356 g/l}$$

$$\text{Gl. (3): } \qquad \text{Kohlendioxid: } CO_2 + H_2O = H^+ + HCO_3^-$$

$$Gl. (4) \qquad Na_2O_{ads} + H^+ + HCO_3^- \rightleftharpoons H_2O + Na_2CO_3 \ _{LSG.}$$

$$L(Na_2CO_3) = 212 \ g/l$$

$$Gl. (5) \qquad Na_2CO_2 \ _{LSG} + CO_2 + H_2O \rightleftharpoons 2 \ NaHCO_3 \ _{LSG.}$$

$$L(NaHCO_3) = 100 \ g/l$$

In Anbetracht der bei den Gleichungen 2 bis 5 angegebenen Löslichkeiten L und der Tatsache, dass Salzsäure eine ausgeprägt starke, Kohlendioxid jedoch eine ausgeprägt schwache Säure ist, ist für Salzsäure = HCl eine deutlich bessere Wirksamkeit zu erwarten.

Tabelle 2: Daten einer Tonerde vor und nach der Behandlung mit HCl bzw. $CO_2$

| Waschmedium | HCl | $CO_2$ |
|---|---|---|
| BET-Oberfläche [$m^2$/g] | 52 | 52 |
| $Na_2O$-Gehalt (zuvor) [Gew. -%] | 0,34 | 0,34 |
| $Na_2O$-Gehalt (nachher) [Gew. -%] | 0,15 | 0,11 |

Wie Tabelle 2 zeigt, erweist sich die Zugabe von $CO_2$ überraschenderweise als sehr effektiv. Während bei der Zugabe von Salzsäure nur 0,19 Gew.-% des $Na_2O$ herausgelöst wurden, wurde der $Na_2O$-Gehalt durch die $CO_2$-Behandlung um 0,23 Gew.-% reduziert. Die Behandlung mit $CO_3$ löste quantitativ eine größere, absolute Menge an $Na_2O$ aus dem Oxid und ist der Behandlung mit Salzsäure überlegen. Im Vergleich der beiden Methoden ist außerdem zu berücksichtigen, dass durch das Waschen mit Salzsäure Chloride in die Tonerde gelangen können, die bei der Weiterverarbeitung während des Sinterprozesses bei hohen Temperaturen als Gas freigesetzt werden sowie die Homogenität des keramischen Gefüges der Hochtemperaturkeramik beeinträchtigen können. Hinzu kommt, dass das stark saure Waschwasser aufwändig und gesondert entsorgt bzw. regeneriert werden muss. Diese Nachteile werden bei der Verwendung von Kohlendioxid vermieden.

Die vorliegende Erfindung bietet somit ein einfacheres, schnelleres Verfahren zur effektiven Entalkalisierung von Tonerden gemäß Anspruch 1. Wie Figur 5 veranschaulicht, kann gemäß der Erfindung aus dem Bayer-Verfahren kommend über eine Tonerde in SGA-Qualität ein Industriekeramik-Rohstoff von hoher Qualität gewonnen werden. Weitere Vorteile des Verfahrens ergeben sich aus den abhängigen Ansprüchen und der folgenden Beschreibung der bevorzugten Ausführungsform.

In einem Behälter mit Intensivrührer wurden über den Bayer-Prozess gewonnene, $Na_2O$-haltige Tonerden in SGA-Qualität unterschiedlicher industrieller Herkunft kontinuierlich mit Drehzahlen im Bereich 50 bis 250 Upm ( = Umdrehungen pro Minute) angemaischt. Der Intensivrührer erlaubte das Ansetzen von Suspension mit einem Feststoffgehalt von 1100 g Tonerde pro Liter Suspension. Es wurden Suspensionen mit 60 bis 1000 g Tonerde pro Liter hergestellt und verwendet. Die alkalische Suspension wurde mit einem Druck von bis zu 10 bar, meistens zwischen 2 und 4 bar, über eine als Begasungsrohr ausgebildete Verweilzeitstrecke mit einem Volumen von 400 Litern gepumpt. Die zu Beginn der Verweilzeitstrecke über eine Dreiphasendüse zugegebene $CO_2$-Menge wurde so bemessen, dass die Suspension am Ende der Verweilzeitetrecke einen pH < 7, vorzugsweise im Bereich von 6,5 bis 6,8 aufwies. Letzteres ging mit Behandlungszeiten von 10 Sekunden bis zu 100 Sekunden, üblicherweise jedoch 40 bis 45 Sekunden, einher. Das Kohlendioxid wurde dabei in die Suspension mit Blasengrößen von bis zu 8mm, vorzugsweise 5mm, Durchmesser in einer Menge von 4 bis 10 g $CO_2$ pro kg Tonerde eingespeist. Über die gesamte Verweilzeitstrecke fiel der Gesamtdruck kontinuierlich ab und wies eine Gesamtdruckdifferenz von insgesamt mindestens 2 bar auf. Die Tonerde wurde abgetrennt, gewaschen, getrocknet und der Restgehalt an $Na_2O$ wurde wie zuvor mittels ICP-OES gemäß DIN EN 725-1 bestimmt.

Tabelle 3 gibt für die verschiedenen Tonerden den $Na_2O$-Gehalt vor und nach der Behandlung, die BET-Oberfläche, bestimmt gemäß DIN 66131, der ursprünglichen Tonerde und den Bereich des Feststoffgehalts der hergestellten Suspensionen in g/l wieder. Man erkennt, dass bei niedriger BET-Oberfläche von 10 $m^2$/g (Beispiel 6) der $Na_2O$-Gehalt nach Behandlung noch relativ hoch lag. In weiteren Versuchen wurde eine BET-Grenze von 30 $m^2$/g ermittelt,

ab der ein Na$_2$O-Gehalt von maximal 0,1 % stets erreicht wurde.

Tabelle 3: Daten verschiedener Tonerden vor und nach der Behandlung mit CO$_2$

| Nr. | 1 | 2 | 3 | 4 | 5 | 6* |
|---|---|---|---|---|---|---|
| BET-Oberfläche [m$^2$/g] | 77 | 73 | 70 | 69 | 50 | 10 |
| Na$_2$O-Gehalt (zuvor) [Gew.-%] | 0,35 | 0,37 | 0,25 | 0,43 | 0,34 | 0,31 |
| Na$_2$O-Gehalt (nachher) [Gew. -%] | 0,08 | 0,07 | 0,03 | 0,10 | 0,10 | 0,14 |
| Feststoffgehalt d. Suspension [g/l] | 200 - 580 | 130 - 580 | 150 - 330 | 60 - 500 | 600 | 400 |
| * Vergleichsbeispiel | | | | | | |

Wie Tabelle 3 veranschaulicht, können mit dem erfindungsgemäßen Verfahren Alkalimetalloxide auf einfache und elegante Art und Weise aus Tonerden entfernt werden. Die BET-Oberfläche ist erkennbar mit der Effektivität der erzielten Entalkalisierung verbunden. Unter Variation der Feststoffgehalte konnten ein Gesamtdruck von 2 bis 10 bar in Kombination mit einer Druckdifferenz von mindestens 2 bar über die als Verweilzeitstrecke ausgebildete Druckleitung und einer CO$_2$-Zugabe von 4g bis 10g CO$_2$ pro Kilogramm Tonerde als geeignete Betriebsbedingungen bestimmt werden. Vorzugsweise wurde dabei die Suspensionstemperatur im Bereich von 10 bis 40 °C gehalten.

Vorteilhafterweise wird vor allem grobkristalline Tonerde vor der erfindungsgemäßen Entalkalisierung zerkleinert bzw. gemahlen, damit mehr Feststoffoberfläche für den Kontakt mit dem blasenförmigen CO$_2$ zur Verfügung steht.

Bei der abschließenden Abtrennung der entalkalisierten Tonerde von der Suspension wurde erkannt, dass Grobanteile von mehr als 10 % > 150 $\mu$m zu einer den Prozess störenden Sedimentation und Feinanteile von mehr als 10 % < 45 $\mu$m zu einer schlechten Abtrennung des Produkts führen.

Gemessen an der Aufgabenstellung der Erfindung konnten ausreichende Ergebnisse ab BET-Oberflächen $\geq$ 30 m$^2$/g erzielt werden. Gute bis sehr gute Ergebnisse wurden ab 50 m$^2$/g erreicht.

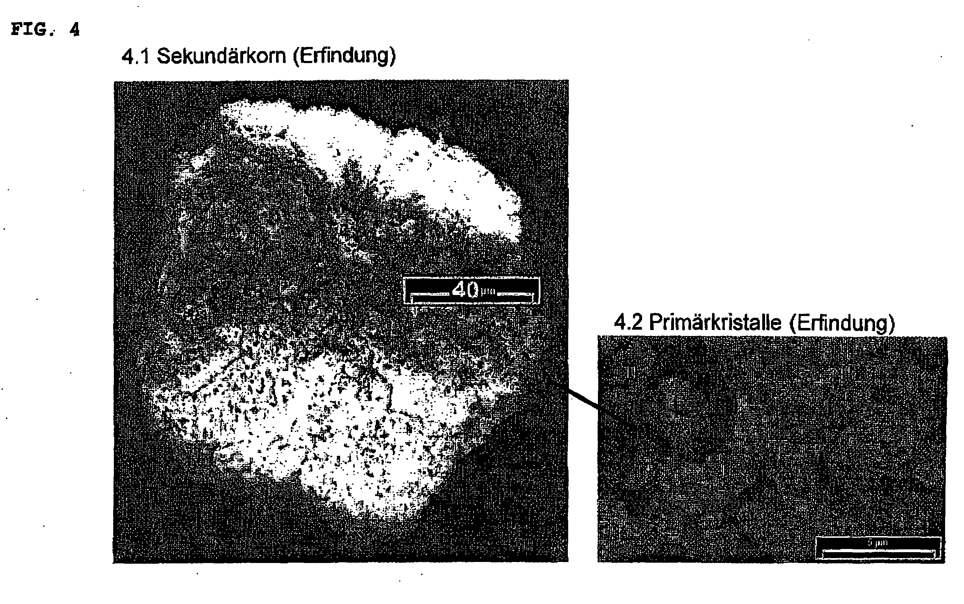

Durch die konstant niedrige Konzentration an Alkalimetalloxiden von $\leq$ 0,1 Gewichtsprozent in der Tonerde werden Aluminiumoxid-Produkte mit genauer vorhersagbaren Eigenschaften zugänglich. Hergestellte gesinterte keramische Probeköper waren durch eine einheitliche Gefügestruktur mit gleichmäßiger Kristallitgröße gekennzeichnet. Die Erfinder gehen davon aus, dass die festgestellte Entalkalisierung von Tonerden zum einen auf dem in der Suspension über den kontinuierlich fallenden Druck dynamisch eingestellten Lösungsgleichgewicht zwischen freiem und carbonatisch gebundenem CO$_2$ und zum anderen auf den ionentauschenden Eigenschaften der Tonerden mit ihrer hohen spezifischen Oberfläche beruht. Im Ergebnis der Umsetzung wird oberflächlich gebundenes Alkali gegen hydratisierte Protonen ausgetauscht. Die entstandene hydratisierte Schicht auf der Oberfläche der Tonerdekristalle wird bei der anschließenden, thermischen Behandlung zersetzt. Bei dem Zersetzen der Schicht wird eine Oxid-Oberfläche ausgebildet, die durch einen einheitlich reinen, homogenen Habitus gekennzeichnet ist. Weiterhin werden einzelne Primärkörner während der thermischen Behandlung an ihren Kontaktstellen durch Kristallisation verbunden. Die Primärkristalle rücken dabei aufeinander zu und bilden ein Sekundärkorn aus. Im Sekundärkorn liegen zuvor vorhandene Porenkanäle als kleine Kristallzwischenräume nahe der Kristallzwickel vor. Wie Figur 4 an Hand zweier REM-Aufnahmen darlegt, kann das einzelne Sekundärkorn als Agglomeratkorn beschrieben werden, das aus dicht gepackten Primärkristallen besteht. Der D50-Wert der Korngrößenverteilung der als Edukt eingesetzten Tonerde bleibt dabei erhalten. Wie Figur 4.2 an einigen in einem Vermahlungsprozess herausgelösten Primärkristallen I, II und III veranschaulicht, sind die Primärkristalle nach der Ausbildung der $\alpha$-Al$_2$O$_3$-Kristallphase durch eine kristalline, flächig-kantige Form gekennzeichnet und im Bekundärkorn in Folge der thermischen Nachbehandlung über ihre Kontaktflächen miteinander verbunden. Die Erfinder nehmen an, dass bei der Herstellung von keramischen Körpern die einheitlich reine Oberfläche und die vorgegebene, gleichmäßige Gefügestruktur in Kombination ein homogenes, beschleunigtes Sinterverhalten und einen keramischen Körper mit verbesserten Eigenschaften zugänglich machen.

Im Rahmen der oben beschriebenen Prozessoptimierung wurden mehrere Chargen von über den Bayer-Prozess gewonnenem Aluminiumhydroxid über Kalzination zur alkalihaltigen Tonerde umgesetzt. Dabei wurde erkannt, dass durch Kalzination bei 800 °C bis 1200 °C für nur 0,5 bis 3 Stunden eine geeignete Tonerde mit einem Anteil an $\alpha$-Al$_2$O$_3$ von maximal 30 % gewonnen werden konnte.

Durch Trocknung und abschließende Kalzination der entalkalisierten Tonerde bei Temperaturen oberhalb 1200 °C für bis zu 4 Stunden wurde ein gereinigtes Aluminiumoxid mit einem Gehalt an $\alpha$-Al$_2$O$_3$ von mindestens 80 % erhalten.

Die Partikel unterliegen bei der abschließenden thermischen Behandlung einem Kristallisationsprozess, wobei die BET-Oberflächen des resultierenden Aluminiumoxids auf Werte zwischen 0,5 bis 10 m$^2$/g eingestellt werden.

Die bei bekannten Methoden auftretenden Verunreinigungen wie SiO$_2$, dessen Gehalt bei vergleichbaren Proben bei $\geq$ 0,05 Gewichtsprozent liegt, sowie B$_3$O$_3$, dessen Gehalt bei der Entalkulinierung mit Borverbindungen häufig ≥ 0,01 Gewichtsprozent beträgt, werden vermieden.

Für die erfindungsgemäßen Produkte ergaben sich folgende Werte :

$$SiO_2 \quad \leq \quad 0,02 \text{ Gewichtsprozent}$$
$$B_2O_3 \quad \leq \quad 0,001 \text{ Gewichtsprozent}$$

Zusätzliche Verunreinigungen durch Halogenide, die bei den beschriebenen Kalzinations- und Waschverfahren auftreten können, werden im erfindungsgemäßen Verfahren ebenso vermieden. Halogenidkonzentrationen kleiner 0,01 Gewichtsprozent F und 0,002 Gewichtsprozent Cl konnten konstant wiederholbar festgestellt werden. Erst im letzten Verfahrensschritt i) wird die entalkalisierte Tonerde nach Trocknung durch thermische Nachbehandlung bei T>1200°C für max. 4 h zu Alpha-Aluminiumoxid mit mindestens 80% Alpha-Anteil umgewandelt. Nur auf Grund dieser besonderen Verfahrensabfolge lässt sich der hohe Alpha-Anteil in Verbindung mit dem niedrigen Alkaligehalt durch Druckbehandlung einer Suspension mit $CO_2$ in einem Begasungsrohr erzielen.

Des weiteren bietet $CO_2$ den Vorteil, dass es sich durch leichte Temperaturerhöhung der Lösung - vorzugsweise unter reduziertem Druck - aus der Lösung vertreiben lässt und dadurch wiedergewonnen werden kann. Hierbei kehrt sich zusätzlich die Bildungsreaktion des Hydrogencarbonats gemäß Gleichung 6 um:

$$\text{Gl. (6)} \qquad 2\ NaHCO_{3\ LSG.} = Na_2CO_{3\ LSG} + CO_2\uparrow + H_2O$$

Das gasförmig anfallende Kohlendioxid, gekennzeichnet als $CO_2\uparrow$, kann aufgefangen und im Verfahren wiederverwendet werden.

Einzig das Carbonat verbleibt gemäß Gleichung (6) in Lösung. Die anfallenden Alkalimetall-Karbonate können abgetrennt und z. B. nach thermischer Behandlung bzw. Kaustifizierung als $Na_2O$ wiederverwendet werden.

Hinzu kommt, dass $CO_2$ als relativ schwache Säure keine korrosionsfesten Anlagen sowie Reaktionsbehälter notwendig macht. Dies erlaubt eine unproblematische, kostengünstige Anpassung bestehender Systeme an das erfindungsgemäße Verfahren.

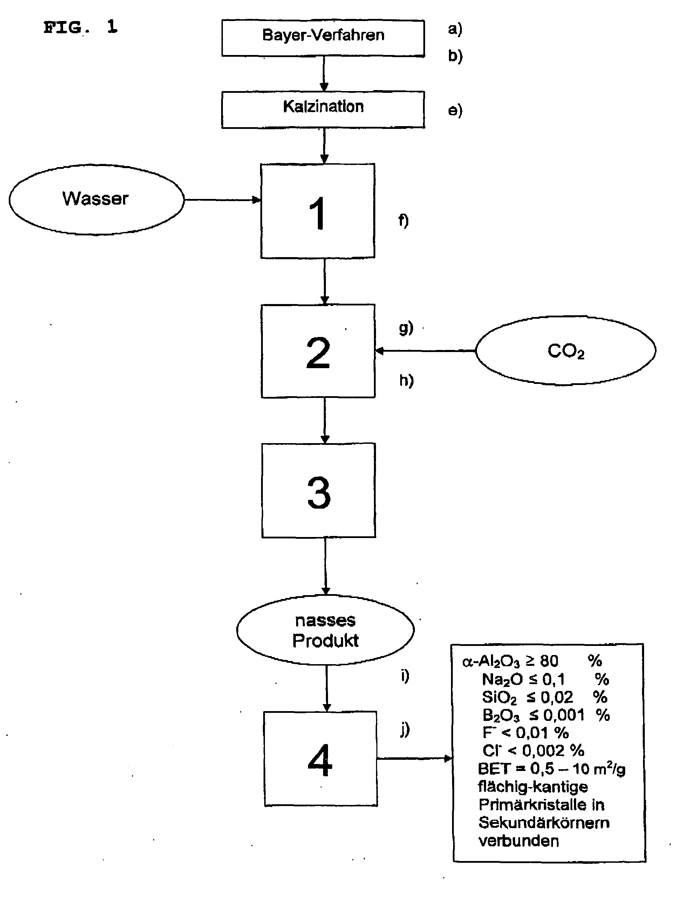

Eine in Fig. 1 als Flussdiagramm veranschaulichte Anlage zur Durchführung des erfindungsgemäßen Verfahrens umfasst miteinander verbundene Vorrichtungen, die entsprechend den notwendigen und vorteilhaften Verfahrensschritten in Baugruppen eingeteilt werden können in:

eine Baugruppe 1 zur Herstellung der benötigten Suspension, umfassend Mittel zu deren Herstellung wie z. B. eine Förderschnecke bzw. Zellenradschleuse, einen statischen Flüssig-Fest-Mischer, ein Intensivrührwerk o. ä., eine Baugruppe 2 zur $CO_2$-Behandlung, umfassend eine Pumpe mit nachgeschaltetem Begasungsrohr sowie vorzugsweise eine Vorrichtung zur Bestimmung des pH-Werts sowie vorzugsweise Mittel zur homogenen Verteilung des $CO_2$ wie z. B. Fritten, Düsen, statische oder dynamische Mischer oder Dreiphasendüsen, eine Baugruppe 3 zur Abtrennung der entalkalisierten Tonerde; eine Baugruppe 4, die Vorrichtungen wie Drehrohr- oder Wirbelschichtreaktor umfasst, welche die abgetrennte, entalkalisierte Tonerde trocknen und durch anschließende Kalzination in reines Aluminiumoxid überführen.

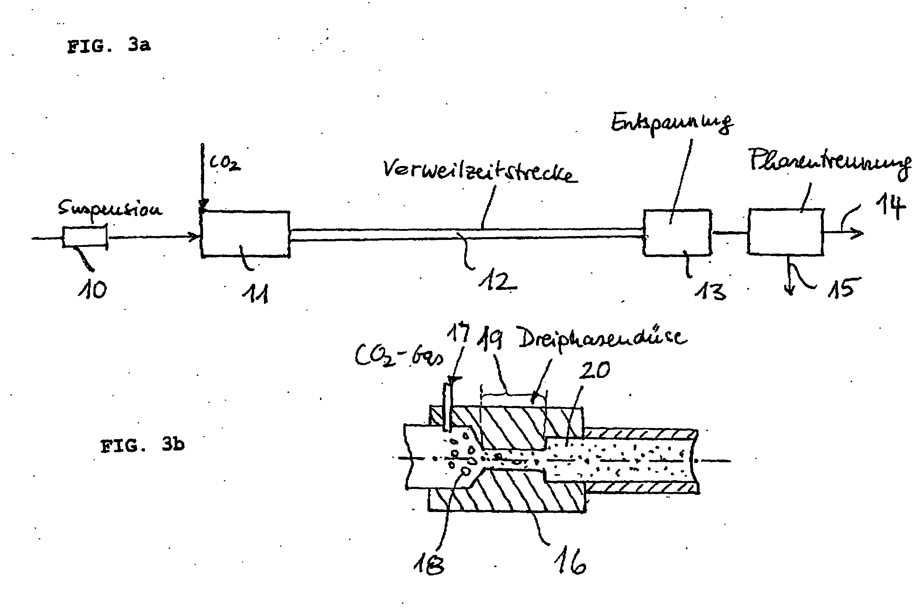

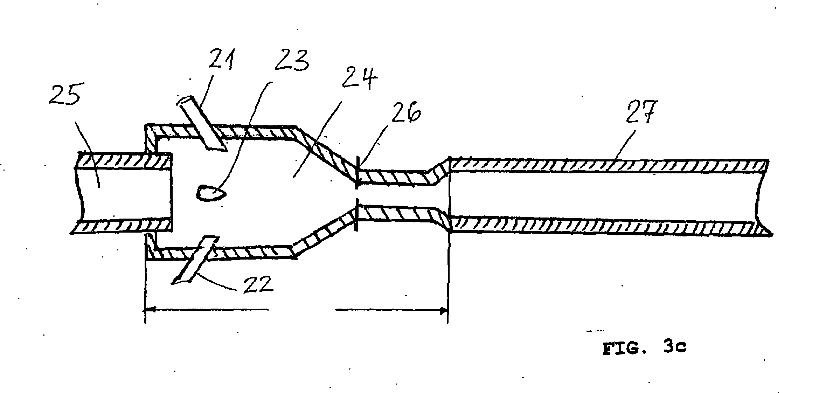

Die Baugruppe 2 zur $CO_2$-Behandlung ist in Figur 3a in der Übersicht und in den Figuren 3b und 3c im Detail dargestellt.

Dabei wird die Suspension über eine Pumpe 10 und eine Dreiphasendüse 11 in eine Verweilzeitstrecke 12 eingeleitet, in der die Entalkalisierungsbehandlung stattfindet. Danach gelangt die Suspension in eine Entspannungseinheit 13, woraufhin die Phasentrennung in einen Flüssiganteil 14 und einen Festanteil 15 erfolgt.

Die Dreiphasendüse ist in FIG. 3b in vergrößerter Darstellung gezeigt. Sie besteht aus einem Gehäuse 16 und einer Gaszuleitung 17, mit der $CO_2$-Gas unter Druck in die Suspension eingeleitet wird. Die dabei auftretenden Bläschen 18 werden in einem Reduzierabschnitt 19 der Dreiphasendüse verdichtet und dann in einem aufgeweiteten Abschnitt 20 entspannt. Dadurch kann die besondere, homogene Verteilung der Gasblasen gemäß Verfahrensabschnitt g) mit einem maximalen Blasendurchmesser von 8 mm erreicht werden.

In Weiterentwicklung dieser Vorrichtung zeigt Figur 3c eine über den Umfang der Dreiphasendüse verteilte Zuleitung von $CO_2$-Gas über radial angeordnete, schräg in das Innere einer Vormischkammer reichende Gaszuführungsleitungen 21, 22, 23. Die Suspension tritt über das im Durchmesser enger gehaltene Zulaufrohr 25 in die erweiterte Vormischkammer 24 ein und trifft hier auf das gasförmige $CO_2$, das über eine Vielzahl von dünnen Röhrchen, vorzugsweise in einem Winkel von 45-60° zur Strömungsrichtung unter hohem Druck eingedüst wird. Durch

Steuerung des Druckes und durch Zu- oder Abschalten von Zuleitungsrohren 21, 22, 23 kann die Menge $CO_2$ pro kg Tonerde und der Blasendurchmesser gesteuert werden. Am Ende der Vormischkammer 24 ist vorzugsweise eine Blende 26 angeordnet. Auch mit dieser Einrichtung ist der Blasendurchmesser und die homogene Verteilung von

$CO_2$ in der Suspension steuerbar. Ferner kann der Gesamtdruck mit einer Druckdifferenz von mindestens 2 bar in dem Begasungsrohr 27 eingestellt werden.

Die Erfindung bietet ein schnelles, einfaches und kostengünstiges Verfahren und eine Vorrichtung zur Entalkalisierung alkalihaltiger Tonerden, wobei die Tonerden durch Kalzination eines über das Bayer-Verfahren gereinigten Tonderohstoffes gewonnen worden sind. Nach der erfindungsgemäßen Entalkalisierung weist das so erhaltene Aluminiumoxid einen Natriumoxid-Gehalt von maximal 0,1 Gew.-% auf. Des weiteren werden Verunreinigungen durch Chloride, Silicate oder Borate, wie sie in etablierten Verfahren möglich sind, vermieden. Konzentrationen von unter 0,02 Gewichtsprozent für $SiO_2$, unter 0,001 Gewichtsprozent für $B_2O_3$ und unter 0,01 Gewichtsprozent F bzw. 0,002 Gewichtsprozent Cl konnten wiederholbar im Endprodukt erzielt werden.

Der erfindungsgemäß gewonnene Industriekeramikrohstoff zeichnet sich durch eine besonders homogene Primärkristallverteilung in Form und Größe mit einheitlich reiner Oberfläche aus und ermöglicht die Herstellung keramischer Komponenten mit besonders homogenen Gefügen. So können unter Verwendung eines erfindungsgemäßen Produktes mit einer im Bereich von 3,5 bis 5,5 $m^2$/g, bevorzugt 4,5 $\pm$ 0,5 $m^2$/g, eingestellten BET-Oberfläche keramische Körper, welche einer hohen mechanischen Belastung bei gleichzeitig einwirkender korrosiver Beanspruchung unterliegen, wie z. B. Pumpenkolben oder Dichtungen, mit verbesserter chemischer und mechanischer Beständigkeit hergestellt werden. Mit einem erfindungsgemäßen Produkt mit einer im Bereich von 0,6 bis 1,2 $m^2$/g, bevorzugt 0,7 $\pm$ 0,25 $m^2$/g, eingestellten BET-Oberfläche können keramische Körper für die Hochtemperaturtechnik, welche einer starken thermischen Belastung von bis zu 1700 °C unterliegen, hergestellt werden, die sich zusätzlich durch eine verringerte Mikrowellenempfindlichkeit auszeichnen. Die gleichmäßige Gefügestruktur der hergestellten Keramik erlaubt zudem eine kostengünstigere Herstellung oberflächenveredelter, d.h. polierter Komponenten in verbesserter Qualität. Durch Verbesserung von Korrosionsbeständigkeit, mechanischer Festigkeit und Oberflächengüte lässt sich die Lebensdauer der keramischen Komponenten wesentlich erhöhen. Der erfindungsgemäß gewonnene Industriekeramikrohstoff erlaubt das schnellere und einfachere Herstellen in reproduzierbar verbesserter Qualität von verschiedenen Produkten für industrielle Zwecke.

Fig. 1: Flussdiagramm: Vorrichtung zur Durchführung des Verfahrens mit Baugruppen 1, 2, 3 und 6

Fig. 2: Flussdiagramm: Kalzinationsreinigung zur Herstellung natriumoxidarmer Aluminiumoxide aus Tonderohstoffen oder Tonerden unter Zugabe von Additiven

Fig. 3: a), b) und c) Düse bzw. Dreiphasendüse (Handzeichnung)

Fig. 4: Veranschaulichung des erfindungsgemäßen Produkts: REM-Aufnahmen v. isolierten Primärkristallen I,II und III und deren Anordnung in Sekundärkörnern (Agglomeratkörnern)

Fig. 5: Flussdiagramm: Verfahren: Sol-Gel-Synthese gegen Verfahren gemäß Erfindung

## Patentansprüche

1. Verfahren zur Herstellung von Industriekeramik-Rohstoffen auf Basis von gereinigtem Aluminiumoxid aus Tonerde, wobei

   a) ein Tonderohstoff über das Bayer-Verfahren erzeugt,

   b) durch Kalzination bei $800 \leq T \leq 1200$ °C zu einer kristallinen, alkalihaltigen Tonerde verarbeitet,

   c) die kristalline Tonerde in einer wässrigen Suspension unter $CO_2$-Zugabe gereinigt, abgetrennt und

   d) anschließend thermisch nachbehandelt wird, **dadurch gekennzeichnet,**

   e) **dass** eine kristalline, alkalihaltige Tonerde, bestehend überwiegend aus Gamma-$Al_2O_3$, mit einem $\alpha$-$Al_2O_3$-Anteil von max. 30%, durch Kalzination für t = 0,5 - 3 h gebildet wird,

   f) **dass** die Tonerde mit einer BET-Oberfläche von mindestens 30 $m^2$/g und einer spezifischen Korngrößenverteilung mit einem Feinanteil < 45 $\mu$m von weniger als 10 % und einem Grobanteil > 150 $\mu$m von weniger als 10 % mittels eines Intensivrührer mit einer Drehzahl von 50 - 250 Upm angemaischt wird bis eine wässrige, alkalische Suspension mit einem Feststoffgehalt von 60-1000 g pro Liter vorliegt,

   g) **dass** in die wässrige, alkalische Suspension der Tonerde bei einem Gesamtdruck P = 2 bis 10 bar blasenförmiges $CO_2$ in einer Menge von 4 bis 10 g $CO_2$ pro kg Tonerde mit einem max. Blasendurchmesser von 8 mm eingebracht wird,

   h) **dass** in der Suspension über eine Verweilzeit von 10 - 100 Sekunden hinweg ein kontinuierlich fallender Gesamtdruck mit einer Druckdifferenz von mindestens 2 bar eingestellt wird,

   i) **dass** die entalkalisierte Tonerde von der flüssigen Phase abgetrennt wird, und

   j) **dass** die entalkalisierte Tonerde getrocknet und bei T > 1200 °C für t = max. 4 h zu gereinigtem Industriekeramik-Rohstoff mit mindestens 80% $\alpha$-$Al_2O_3$, Rest Übergangstonerde, und mit einer BET-Oberfläche von 0,5 bis 10 $m^2$/g thermisch nachbehandelt wird.

**2.** Verfahren nach Anspruch 1, **<u>dadurch gekennzeichnet, dass</u>** die mittelt von Intensivrührern angemaischte Tonerde im Verfahrensschritt f)

eine BET-Oberfläche von 50 $m^2$/g und einen Feststoffgehalt der Suspension von 600 g/l bei einem $Na_2O$-Gehalt von 0,34 Gew.-% vor und 0,10 Gew.-% nach der Behandlung mit $CO_2$,

eine BET-Oberfläche von 69 $m^2$/g und einen Feststoffgehalt der Suspension von 60-500 g/l bei einem $Na_2O$-Gehalt von 0,43 Gew.-% vor und 0,10 Gew.-% nach der Behandlung mit $CO_2$,

eine BET-Oberfläche von 70 $m^2$/g und einen Feststoffgehalt der Suspension von 150-330 g/l bei einem $Na_2O$-Gehalt von 0,25 Gew.-% vor und 0,03 Gew.-% nach der Behandlung mit $CO_2$,

eine BET-Oberfläche von 73 $m^2$/g und einen Feststoffgehalt der Suspension von 130-580 g/l bei einem $Na_2O$-Gehalt von 0,37 Gew.-% vor und 0,07 Gew.-% nach der Behandlung mit $CO_2$,

eine BET-Oberfläche von 77 $m^2$/g und einen Feststoffgehalt der Suspension von 200-580 g/l bei einem $Na_2O$-Gehalt von 0,35 Gew.-% vor und 0,08 Gew.-% nach der Behandlung mit $CO_2$ aufweist.

**3.** Verfahren nach einem der vorhergehenden Ansprüche, **<u>dadurch gekennzeichnet, dass</u>** der $CO_2$-Partialdruck der Suspension so eingestellt wird, dass die Suspension einen pH-Wert im Bereich von 6,5 bis 7 aufweist.

**4.** Verfahren nach einem der vorhergehenden Ansprüche, **<u>dadurch gekennzeichnet,</u> dass** die wässrige Suspension der Tonerde einen Feststoff-Gehalt im Bereich von 150 g bis 600 g pro Liter aufweist.

**5.** Verfahren nach einem der vorhergehenden Ansprüche, **<u>dadurch gekennzeichnet,</u> dass** in den Verfahrensschritten e) - i) die kristalline Tonerde in ihrer Struktur zu mindestens 70 % Strukturen der Übergangstonerden sowie des Gamma-$Al_3O_3$ und zu max. 30 % die Struktur der Alpha-Modifikation des $Al_2O_3$ aufweist.

**6.** Verfahren nach Anspruch 5, **dadurch <u>gekennzeichnet,</u> dass** die Tonerde in den Verfahrensschritten e) - i) eine BET-Oberfläche von mindestens 50 $m^2$/g aufweist und im Verfahrensschritt j) die BET-Oberfläche auf 0,5 -10 $m^2$/g eingestellt wird.

**7.** Verfahren nach einem der vorhergehenden Ansprüche, **<u>dadurch gekennzeichnet, dass</u>** das $CO_2$ die Suspension in Form von Bläschen mit einem Durchmesser von maximal 5 mm vollständig durchströmt.

**8.** Verfahren nach einem der vorhergehenden Ansprüche, **<u>dadurch gekennzeichnet, dass</u>** in der Suspension ein Gesamtdruck von 2 bis 4 bar bei einer Temperatur von 10 - 40°C herrscht.

**9.** Vorrichtung zur Durchführung des Verfahrens nach Anspruch 1, umfassend je eine Baugruppe zur Reinigung von Tonerderohstoffen und zur Kalzination der Tonerde, eine Baugruppe 1 zur Herstellung einer Suspension, eine Baugruppe 2 zur $CO_2$-Behandlung der Suspension in einem Begasungsrohr, ausgebildet als Verweilzeitstrecke für einen Gesamtdruck von bis zu 10 bar bei kontinuierlicher Druckdifferenz über die Verweilzeitetrecke von mindestens 2 bar, mit zuflussseitig angeordneter $CO_2$-Einspeisung und abflussseitig angeordneter Entspannungseinheit, eine Baugruppe 3 zur Abtrennung der entalkalinierten Tonerde, eine Baugruppe 4, umfassend Mittel zur Trocknung der entalkalisierten Tonerde und anschließenden thermischen Behandlung zum gereinigten Oxid.

**10.** Vorrichtung nach Anspruch 9, umfassend eine Baugruppe 2 mit Mitteln zur homogenen Verteilung von $CO_2$ in der Verweilzeitstrecke des Begasungsrohres.

**11.** Vorrichtung nach einem der Ansprüche 9 bis 10, umfassend eine Dreiphasendüse, zur Begasung der Suspension.

**12.** Industriekeramik-Rohstoff, hergestellt nach einem der Ansprüche 1-8, bestehend aus Aluminiumoxid mit mindestens 80% Alpha-Oxid, wobei der Rest die Struktur von Übergangstonerden aufweist und wobei der Natriumoxid-Gehalt maximal 0,1 Gewichtsprozent beträgt, der $SiO_2$-Gehalt ≤ 0,02 Gewichtsprozent, der $B_2O_3$-Gehalt ≤ 0,001 Gewichtsprozent ist, der Halogenidgehalt unter 0,01 Gewichtsprozent F und 0,002 Gewichtsprozent C1 liegt, und die BET-Oberfläche des entalkalisierten Aluminiumoxids 0,5 - 10 $m^2$/g beträgt, wobei der Industriekeramik-Rohstoff eine gleichmäßige Gefügestruktur aufweist, bei der das Aluminiumoxid aus Sekundärkörnern besteht, die ihrerseits aus Primärkristallen von kristalliner, flächig-kantiger Form bestehen, wobei die Primärkristalle über ihre Kontaktflächen miteinander verbunden sind und kleine Kristallzwischenräume nahe der Kristallzwickel aufweisen.

**13.** Industriekeramik-Rohstoff nach Anspruch 12, **<u>dadurch gekennzeichnet, dass</u>** die BET-Oberfläche des zur Herstellung von thermisch stark belastbaren und verringert mikroweilenempfindlichen keramischen Körpern geeigneten Rohstoffs 0, 5 - 0, 95 $m^2$/g beträgt.

**14.** Industriekaramik-Rohstoff nach Anspruch 12, <u>**dadurch gekennzeichnet, dass**</u> die BET-Oberfläche des zur Herstellung von mechanisch und korrosiv stark belastbaren keramischen Körpern geeigneten Rohstoffs 4,5 +- 0,5 $m^2/g$ beträgt.

**Claims**

**1.** Method for manufacturing raw materials for industrial ceramics on the basis of purified aluminium oxide from alumina, comprising

a) preparing an alumina raw material by the Bayer process;
b) calcining the material at 800 ≤ T S 1200 °C to obtain a crystalline, alkali-containing alumina;
c) purifying the crystalline alumina in an aqueous suspension, with addition of $CO_2$, separating the alumina, and
d) subsequently thermally treating the alumina,
<u>**characterised in that**</u>
e) a crystalline, alkali-containing alumina mainly consisting of gamma-$Al_2O_3$ with an $\alpha$-$Al_2O_3$ content of at the most 30% is obtained by calcining for t = 0.5-3 h;
f) the alumina exhibiting a BET surface area of at least 30 $m^2/g$, and a specific particle size distribution with a fine (<45 $\mu$m) particle fraction of less than 10% and a coarse (>150 $\mu$m) particle fraction of less than 10%, is slurried in an intensive agitator with a number of revolutions of 50-250 rpm until obtaining an aqueous, alkaline suspension with a solids content of 60-1000 g/l;
g) a bubble-forming $CO_2$ with a maximum bubble diameter of 8 mm is introduced in an amount of 4-10 g of $CO_2$ per kg of alumina into the aqueous, alkaline suspension of alumina at a total pressure of P = 2-10 bar;
h) for a retention time of 10-100 seconds, a continuously decreasing total pressure with a pressure difference of at least 2 bar is adjusted in the suspension;
i) the dealkalized alumina is separated from the liquid phase; and
j) the dealkalized alumina is dried and is thermally aftertreated at T > 1200 °C for t = max. 4 hours to obtain purified raw material for industrial ceramics containing at least 80% of $\alpha$-$Al_2O_3$, the remainder being transition alumina, and with a BET surface area of 0.5 to 10 $m^2/g$.

**2.** Method according to claim 1, **characterised in that** the alumina slurried in process step f) by means of intensive agitators has
a BET surface area of 50 $m^2/g$, and a solids content of the suspension of 600 g/l, with an $Na_2O$ content of 0.34%-wt. prior to, and 0.10%-wt. after treatment with $CO_2$;
a BET surface area of 69 $m^2/g$, and a solids content of the suspension of 60-500 g/l, with an $Na_2O$ content of 0.43%-wt. prior to, and 0.10%-wt. after treatment with $CO_2$;
a BET surface area of 70 $m^2/g$, and a solids content of the suspension of 150-330 g/l, with an $Na_2O$ content of 0.25%-wt. prior to, and 0.03%-wt. after treatment with $CO_2$;
a BET surface area of 73 $m^2/g$, and a solids content of the suspension of 130-580 g/l, with an $Na_2O$ content of 0.37%-wt. prior to, and 0.07%-wt. after treatment with $CO_2$;
a BET surface area of 77 $m^2/g$, and a solids content of the suspension of 200-580 g/l, with an $Na_2O$ content of 0.35%-wt. prior to, and 0.08%-wt. after treatment with $CO_2$.

**3.** Method according to any one of the preceding claims, **characterised in that** the $CO_2$ partial pressure of the suspension is adjusted such that the suspension has a pH value in the range from 6.5 to 7.

**4.** Method according to any one of the preceding claims, **characterised in that** the aqueous suspension of alumina has a solids content in the range from 150 g to 600 g per litre.

**5.** Method according to any one of the preceding claims, **characterised in that** in the process steps e) - i), at least 70% of the structure of the crystalline alumina is made up of structures of the transition aluminas and of gamma-$Al_2O_3$, and at the most 30% of said structure is made up of the structure of the alpha-modification of $Al_2O_3$.

**6.** Method according to claim 5, **characterised in that** in the process steps e) - i) the alumina has a BET surface area of at least 50 $m^2/g$, and that in the process step j) the BET surface area is adjusted to 0.5 - 10 $m^2/g$.

**7.** Method according to any one of the preceding claims, **characterised in that** the suspension is completely permeated by the $CO_2$ in the form of bubbles having a maximum diameter of 5 mm.

8. Method according to any one of the preceding claims, **characterised in that** in the suspension there is a total pressure of 2 to 4 bar, at a temperature of 10 - 40 °C.

9. Device for carrying out the method according to claim 1, comprising one assembly unit each for purifying alumina raw materials and for calcining the alumina; an assembly unit 1 for preparing a suspension; an assembly unit 2 for carbon dioxide treatment of the suspension in a gassing tube, adapted to form a retention time section for a total pressure of up to 10 bar with a continuous pressure difference over the retention time section of at least 2 bar, with a $CO_2$ feed arranged at the inflow end and an expansion unit arranged at the outflow end; an assembly unit 3 for separating the dealkalized alumina; an assembly unit 4 comprising means for drying the dealkalized alumina and for subsequent thermal treatment to obtain the purified oxide.

10. Device according to claim 9, comprising an assembly unit 2 with means for homogeneously distributing $CO_2$ in the retention time section of the gassing tube.

11. Device according to any one of claims 9 to 10, comprising a three-phase nozzle for gassing the suspension.

12. Raw material for industrial ceramics, manufactured according to any one of claims 1-8, consisting of aluminium oxide with at least 80% alpha-oxide, the remainder exhibiting the structure of transition aluminas, the sodium oxide content being at the most 0.1 percent by weight, the $SiO_2$ content $\leq$ 0.02 percent by weight, the $B_2O_3$ content $\leq$ 0.001 percent by weight, the halogenide content being less than 0.01 percent by weight of F and 0.002 percent by weight of Cl, and the BET surface area of the dealkalized aluminium oxide being 0.5-10 $m^2/g$, said raw material for industrial ceramics having a uniform structural constitution wherein the aluminium oxide consists of secondary grains which in turn consist of primary crystals of crystalline, flat-angular shape, said primary crystals being connected to one another at their contact surfaces and having small interstitial spaces in the vicinity of the crystal wedges.

13. Raw material for industrial ceramics according to claim 12, **characterised in that** the BET surface area of the raw material suitable for producing ceramic bodies that have a high thermal load capacity and a reduced sensitivity to microwaves is 0.5-0.95 $m^2/g$.

14. Raw material for industrial ceramics according to claim 12, **characterised in that** the BET surface area of the raw material suitable for producing ceramic bodies that have a high mechanical load capacity and a high corrosion resistance is 4.5 +- 0.5 $m^2/g$.

**Revendications**

1. Procédé de production de matières premières pour la céramique industrielle à base d'oxyde d'aluminium purifié provenant d'alumine, où

   a) une matière première d'alumine est produite par le procédé Bayer,
   b) est transformée par calcination à 800 $\leq$ T $\leq$ 1200°C en une alumine cristalline contenant des alcalis,
   c) l'alumine cristalline est purifiée dans une suspension aqueuse avec addition de $CO_2$, séparée et
   d) ensuite post-traitée thermiquement, **caractérisé**
   e) **en ce qu'**on forme une alumine cristalline contenant des alcalis, essentiellement constituée de gamma-$Al_2O_3$ avec une proportion d'$\alpha$-$Al_2O_3$ d'au maximum 30%, par calcination pendant t = 0,5-3 h,
   f) **en ce que** l'alumine, présentant une surface BET d'au moins 30 $m^2/g$ et une répartition granulométrique spécifique présentant une proportion de fines < 45 $\mu$m inférieure à 10% et une teneur en grosses particules > 150 $\mu$m inférieure à 10%, est malaxée au moyen d'un agitateur intensif à une vitesse de rotation de 50-250 t/min jusqu'à ce qu'on obtienne une suspension aqueuse alcaline présentant une teneur en solides de 60-1000 g par litre,
   g) **en ce qu'**on introduit dans la suspension aqueuse alcaline de l'alumine, à une pression totale de P = 2 à 10 bars du $CO_2$ sous forme de bulles en une quantité de 4 à 10 g de $CO_2$ par kg d'alumine avec un diamètre maximal des bulles de 8 mm,
   h) **en ce que** la suspension est réglée, sur un temps de séjour de 10-100 secondes à une pression totale diminuant en continu avec une différence de pression d'au moins 2 bars,
   i) **en ce que** l'alumine désalcalinisée est séparée de la phase liquide et
   j) **en ce que** l'alumine désalcalinisée est séchée et post-traitée thermiquement à T > 1200°C pendant t = max. 4 h en matière première purifiée pour la céramique industrielle présentant au moins 80% d'$\alpha$-$Al_2O_3$, le reste

étant des alumines de transition, et présentant une surface BET de 0,5 à 10 m$^2$/g.

2. Procédé selon la revendication 1, **caractérisé en ce que** l'alumine malaxée au moyen d'agitateurs intensifs dans l'étape de procédé f)

présente une surface BET de 50 m$^2$/g et une teneur en solides de la suspension de 600 g/l à une teneur en Na$_2$O de 0,34% en poids avant et de 0,10% en poids après le traitement avec le CO$_2$,

présente une surface BET de 69 m$^2$/g et une teneur en solides de la suspension de 60-500 g/l à une teneur en Na$_2$O de 0,43% en poids avant et de 0,10% en poids après le traitement avec le CO$_2$,

présente une surface BET de 70 m$^2$/g et une teneur en solides de la suspension de 150-330 g/l à une teneur en Na$_2$O de 0,25% en poids avant et de 0,03% en poids après le traitement avec le CO$_2$,

présente une surface BET de 73 m$^2$/g et une teneur en solides de la suspension de 130-580 g/l à une teneur en Na$_2$O de 0,37% en poids avant et de 0,07% en poids après le traitement avec le CO$_2$,

présente une surface BET de 77 m$^2$/g et une teneur en solides de la suspension de 200-580 g/l à une teneur en Na$_2$O de 0,35% en poids avant et de 0,08% en poids après le traitement avec le CO$_2$.

3. Procédé selon l'une quelconque des revendications précédentes, **caractérisé en ce que** la pression partielle de CO$_2$ de la suspension est réglée de manière telle que la suspension présente un pH dans la plage de 6,5 à 7.

4. Procédé selon l'une quelconque des revendications précédentes, **caractérisé en ce que** la suspension aqueuse de l'alumine présente une teneur en solides dans la plage de 150 g à 600 g par litre.

5. Procédé selon l'une quelconque des revendications précédentes, **caractérisé en ce que** dans les étapes de procédé e)-i) l'alumine cristalline présente dans sa structure à raison d'au moins 70% des structures des alumines de transition ainsi que de la gamma-Al$_2$O$_3$ et à raison d'au maximum 30% la structure de la modification alpha de l'Al$_2$O$_3$.

6. Procédé selon la revendication 5, **caractérisé en ce que** l'alumine dans les étapes de procédé e)-i) présente une surface BET d'au moins 50 m$^2$/g et dans l'étape de procédé j), la surface BET est réglée à 0,5-10 m$^2$/g.

7. Procédé selon l'une quelconque des revendications précédentes, **caractérisé en ce que** le CO$_2$ passe complètement dans la suspension sous forme de bulles présentant un diamètre d'au maximum 5 mm.

8. Procédé selon l'une quelconque des revendications précédentes, **caractérisé en ce qu'**il règne dans la suspension une pression totale de 2 à 4 bars à une température de 10-40°C.

9. Dispositif pour réaliser le procédé selon la revendication 1, comprenant à chaque fois un module pour la purification des matières premières d'alumine et pour la calcination de l'alumine, un module 1 pour la préparation d'une suspension, un module 2 pour le traitement au CO$_2$ de la suspension dans un tube de gazage, réalisé sous forme de zone de temps de séjour pour une pression totale allant jusqu'à 10 bars à une différence de pression continue sur la zone de temps de séjour d'au moins 2 bars, avec une introduction de CO$_2$ agencée du côté de l'alimentation et une unité de détente agencée du côté de l'évacuation, un module 3 pour la séparation de l'alumine désalcalinisée, un module 4, comprenant des moyens pour le séchage de l'alumine désalcalinisée et le traitement thermique consécutif en oxyde purifié.

10. Dispositif selon la revendication 9, comprenant un module 2 avec des moyens pour la répartition homogène de CO$_2$ dans la zone de temps de séjour du tube de gazage.

11. Dispositif selon l'une quelconque des revendications 9 à 10, comprenant un gicleur à trois phases pour le gazage de la suspension.

12. Matière première pour céramique industrielle, produite selon l'une quelconque des revendications 1-8, constituée par de l'oxyde d'aluminium avec au moins 80% d'alpha-oxyde, le reste présentant la structure d'alumines de transition et où la teneur en oxyde de sodium est d'au maximum 0,1% en poids, la teneur en SiO$_2$ est $\leq$ 0,02% en poids, la teneur en B$_2$O$_3$ est $\leq$ 0,001% en poids, la teneur en halogénures est inférieure à 0,01% en poids de F et 0,002% en poids de Cl, et la surface BET de l'oxyde d'alumine désalcalinisée est de 0,5-10 m$^2$/g, où la matière première pour céramique industrielle présente une structure de réseau régulière dans laquelle l'oxyde d'aluminium est constitué par des grains secondaires, qui sont constitués à leur tour de cristaux primaires de forme cristalline, à bords plats, les cristaux primaires étant liés les uns aux autres via leurs surfaces de contact et ne présentant pas d'espaces entre les cristaux à proximité des coins des cristaux.

**13.** Matière première pour céramique industrielle selon la revendication 12, **caractérisée en ce que** la surface BET de la matière première appropriée pour la production de corps céramiques pouvant être fortement sollicités thermiquement et moins sensibles aux micro-ondes est de 0,5-0,95 m$^2$/g.

**14.** Matière première pour céramique industrielle selon la revendication 12, **caractérisée en ce que** la surface BET de la matière première appropriée pour la production de corps céramiques pouvant être fortement sollicités mécaniquement et par la corrosion est de 4,5+/~0,5 m$^2$/g.

**FIG. 1**

Bayer-Verfahren — a)

b)

Kalzination — e)

Wasser → 1 — f)

2 ← CO₂ — g)

h)

3

nasses Produkt

i)

4 — j)

$\alpha$-Al$_2$O$_3$ $\geq$ 80 %
Na$_2$O $\leq$ 0,1 %
SiO$_2$ $\leq$ 0,02 %
B$_2$O$_3$ $\leq$ 0,001 %
F⁻ < 0,01 %
Cl⁻ < 0,002 %
BET = 0,5 – 10 m²/g
flächig-kantige Primärkristalle in Sekundärkörnern verbunden

## Kalzinations-Reinigung

```
          ┌─────────────────────────────┐
          │      Tonerderohstoff        │────────────┐
          └──────────────┬──────────────┘            │
                         ↓                            │
          ┌─────────────────────────────┐            │
          │        Kalzinieren          │            │
          └──────────────┬──────────────┘            │
                         │                            │
                         ↓                            │
          ┌─────────────────────────────┐            │
          │     alkalihaltigeTonerde    │            │
          └──────────────┬──────────────┘            │
                         ↓                            ↓
   ┌────────────────────────────────────────────────────┐
   │     Kalzination unter Zugabe von Additiven:        │
   └────────────────────────────────────────────────────┘
   ┌────────────┐   ┌────────────┐   ┌────────────┐
   │ Si-Verbdg. │   │ Bor-Verbdg.│   │ Halogenide │
   └──────┬─────┘   └──────┬─────┘   └──────┬─────┘
          ↓                ↓                ↓
   ┌────────────┐   ┌──────────────────────────────┐
   │ Al-Oxid + Si-│  │        Al-Oxid +             │
   │   Verbdg.    │  │  Bor- und/oder Halogenide    │
   └────────────┘   └──────────────────────────────┘
```

## FIG. 2

FIG. 3a

Suspension     $CO_2$     Verweilzeitstrecke     Entspannung     Phasentrennung

10     11     12     13     14     15

FIG. 3b

$CO_2$-Gas     17   19 Dreiphasendüse     20

18     16

EP 1 854 762 B1

FIG. 3c

## 4.1 Sekundärkorn (Erfindung)

## 4.2 Primärkristalle (Erfindung)

EP 1 854 762 B1

## Erfindung

### Sol-Gel-Synthese

1) Aluminium ( ca. 98%)

↓

2) Al-Sol ( ca. 98%)

↓

3) Al-Sol ( > 99,99%)

↓

4) Al-Gel ( > 99,99%)

↓

5) Aluminiumoxid ( > 99,99%)

↓

6) Aluminiumoxid ( > 99,99%) Pulver; monosized; sphärisch

I) Aluminiumoxid

SGA-Tonerde; $\alpha$ < 30%;
Rest Übergangstonerden;
$Na_2O \approx 0,5\%$; BET > 30 m²/g

↓

II) Tonerde-Suspension

↓

III) $CO_2$-Druckbehandlung

2 – 10 bar; 4 – 10g $CO_2$/kg
Tonerde; 10 – 100 Sekunden;
kontinuierl. Druckabfall v. 2 bar

↓

IV) Kalzination T > 1200 °C; t = max. 4 h

↓

V) Industriekeramik-Rohstoff

$Al_2O_3$ mit:     $\alpha$-$Al_2O_3$ > 80    %
              $Na_2O \leq 0,1$    %
              $SiO_2$ < 0,02    %
              $B_2O_3$ < 0,001 % ,
              F⁻ < 0,01 %; Cl⁻ < 0,002 %;
flächig-kantige Primärkristalle in
Sekundärkörnern verbunden;
BET = 0,5 m²/g – 10 m²/g

FIG. 5

**IN DER BESCHREIBUNG AUFGEFÜHRTE DOKUMENTE**

**In der Beschreibung aufgeführte Patentdokumente**

- FR 2725440 A1
- GB 2108949 A
- US 3106452 A
- JP 2005263529 B


**In der Beschreibung aufgeführte Nicht-Patentliteratur**

- **Petzold, A. ; Ulbricht, J.** Aluminiumoxid. Deutscher Verlag, 1990, 130 ff
- Technische Keramische Werkstoffe. Verlagsgruppe Deutscher Wirtschaftsdienst